# EUROPEAN PATENT APPLICATION

(11) **EP 4 050 588 A1**
(43) Date of publication of application: **31.08.2022**
(21) Application number: 20878501.4
(22) Date of filing: 06.10.2020
(51) Int. Cl.: G09B 5/06, G09B 19/00, H04N 5/76, H04N 5/93

(54) **LEARNING ANALYSIS DEVICE, LEARNING ANALYSIS METHOD, AND PROGRAM**

(30) Priority: 25.10.2019 US 201962925771 P
(71) Applicant: Teikyo University, Tokyo 173-8605 (JP)
(72) Inventor: NAKAKI Toshio, Tokyo 173-8605 (JP)
(74) Representative: Zimmermann, Tankred Klaus
(86) International application number: PCT/JP2020/037840
(87) International publication number: WO 2021/079734

(57) **Abstract**

A learning analysis device includes a playback operation information acquisition unit configured to acquire playback operation information in which a playback operation of the same learning content performed by each of a plurality of learners is recorded, a result information acquisition unit configured to acquire result information indicating a result of each of the plurality of learners in a test conducted after the playback operation is performed, a learning content information acquisition unit configured to acquire learning content information that is information indicating what is played back at each of a plurality of playback positions between a playback start position and a playback end position of the learning content, and an extraction processing unit configured to execute a process of extracting one or more playback positions from the plurality of playback positions between the playback start position and the playback end position of the learning content based on a difference between the playback operation information of a learner having a test result greater than or equal to a first threshold value and the playback operation information of a learner having a test result less than the first threshold value.

## Description

### [Technical Field]

The present invention relates to a learning analysis device, a learning analysis method, and a program.

Priority is claimed on United States Provisional Application No. 62/925771, filed October 25, 2019, the content of which is incorporated herein by reference.

### [Background Art]

In the related art, a content playback system that generates statistical information related to a playback operation from recorded playback operation information of a plurality of users is known (refer to Patent Document 1). For example, Patent Document 1 discloses that a part of interest in content is determined from the playback operation information of a user. Cumulative frequency distribution information related to the playback operation information for each any playback section of the content is generated. A playback section for which frequency information per playback is greater than or equal to a predetermined threshold value is extracted. The cumulative frequency distribution information and playback control information are managed in association with the content.

In addition, for example, Patent Document 1 discloses that frequency distribution information is created by assigning a high weight when playback speed information indicates slow playback. The user views content that can be divided into sections in time series. The user may desire to check details of the content again. The played content is video content compressed in MPEG format. The played content is video image content in a format in which the video content is formed by consecutively displaying still pictures. The played content is music content.

Furthermore, for example, Patent Document 1 discloses that the playback control information from a client is continuously recorded in accordance with a playback time of the content. The content is divided into any playback sections. The playback operation information in each playback section is quantified. Each playback operation information is configured with a command reception time, a playback start time, a playback direction, and a playback speed. A group of pictures (GOP) is handled as the smallest playback section unit.

In the technology disclosed in Patent Document 1, while the playback operation information of the user is used, a test result of the user who viewed the played content is not used. Thus, in the technology disclosed in Patent Document 1, information (for example, information about a playback position that needs to be repeatedly played back in order to achieve a high result) useful for the user who viewed the played content cannot be obtained. In addition, in the technology disclosed in Patent Document 1, information (for example, information about a playback position that was difficult to understand for the user who viewed the played content) useful for a creator of the content cannot be obtained.

In addition, in the related art, an information processing system that generates a variable based on a recording result of a playback process performed a plurality of times for the same video is known (refer to Patent Document 2). For example, Patent Document 2 discloses that an elapsed time from the start of the playback process of the video and a position at which playback is performed by the playback process in the video are recorded in accordance with each other. A lecture scene is imaged as a video image and is viewed later. The video image is distributed as a TV video or through the Internet. A learner views the video image on a TV, PC, or the like.

In addition, for example, Patent Document 2 discloses that in a case where a speed of understanding of the learner does not keep up with a speed of the video, the learner controls the video image by temporarily stopping or rewinding the video image. A viewing history of the video is collected by a video management device. A location in which the video image is temporarily stopped, and a location in which playback is repeated are locations in which it takes time to understand.

In the technology disclosed in Patent Document 2, while the viewing history of the learner is used, a test result of the learner who viewed the video is not used. Thus, in the technology disclosed in Patent Document 2, information (for example, information about a playback position that needs to be repeatedly played back in order to achieve a high result) useful for the user who viewed the video cannot be obtained. In addition, in the technology disclosed in Patent Document 2, information (for example, information about a playback position that was difficult to understand for a learner who viewed the video) useful for a creator of the video cannot be obtained.

Furthermore, in the related art, an electronic teaching material analysis server that suggests an improvement location in an electronic teaching material that is a video is known (refer to Patent Document 3). For example, Patent Document 3 discloses that analysis is performed by scoring a playback speed for each playback position of the electronic teaching material. An understanding contribution degree for a learner of learning content is detected.

In the technology disclosed in Patent Document 3, while the playback speed for each playback position of the electronic teaching material is used, the test result of the learner who viewed the played electronic teaching material is not used. Thus, in the technology disclosed in Patent Document 3, information (for example, information about a playback position that needs to be repeatedly played back in order to achieve a high result) useful for the learner who viewed the played electronic teaching material cannot be obtained. In addition, in the technology disclosed in Patent Document 3, information (for example, information about a playback position that was difficult to understand for the learner who viewed the electronic teaching material and achieves a poor test result) useful for a creator of the learning content cannot be obtained.

In addition, in the related art, a content distribution system intended to increase a learning effect is known (refer to Patent Document 4). Patent Document 4 discloses that it is desirable to use a numerical value such as a score of an individual learner in, for example, a TOEIC (registered trademark) test or a target value of the score as a learning level input by a learner.

While Patent Document 4 discloses that it is desirable to use the numerical value such as the score of the test, the numerical value such as the score of the test performed after a distributed content is viewed is not used in the technology disclosed in Patent Document 4. Thus, in the technology disclosed in Patent Document 4, information (for example, information about a playback position that needs to be repeatedly played back in order to achieve a high result in the test performed after the content is viewed) useful for the learner who viewed the distributed content cannot be obtained. In addition, in the technology disclosed in Patent Document 4, information (for example, information about a playback position that was difficult to understand for the learner who viewed the content and achieves a poor test result performed after the content is viewed) useful for the creator of the learning content cannot be obtained.

Furthermore, in the related art, an e-Learning system having a function of detecting an understanding contribution degree for a learner of learning content is known (refer to Patent Document 5). Patent Document 5 discloses that an e-Leaming server including a required time database in which a required time of the learner by e-Learning is accumulated detects the understanding contribution degree for the learner of the learning content and furthermore, provides information about the contribution degree as a graph to a computer of a teaching and instructor.

In the technology disclosed in Patent Document 5, while the time required for e-Learning by the learner is used, a test result of the learner who viewed the learning content is not used. Thus, in the technology disclosed in Patent Document 5, information (for example, information about a playback position that needs to be repeatedly played back in order to achieve a high result) useful for the learner who viewed the learning content cannot be obtained. In addition, in the technology disclosed in Patent Document 5, information (for example, information about a playback position that was difficult to understand for the learner who viewed the learning content and achieves a poor test result) useful for the creator of the learning content cannot be obtained.

### [Citation List]

### [Patent Documents]

[Patent Document 1]
   Japanese Unexamined Patent Application, First Publication No. 2009-206841
[Patent Document 2]
   Japanese Unexamined Patent Application, First Publication No. 2013-196736
[Patent Document 3]
   Japanese Unexamined Patent Application, First Publication No. 2015-011290
[Patent Document 4]
   Japanese Unexamined Patent Application, First Publication No. 2006-337490
[Patent Document 5]
   Japanese Unexamined Patent Application, First Publication No. 2006-133616

### [Summary of Invention]

### [Technical Problem]

In view of the above problem, an object of the present invention is to provide a learning analysis device, a learning analysis method, and a program that can obtain information useful for a learner and a creator of learning content.

### [Solution to Problem]

One aspect of the present invention is a learning analysis device including a playback operation information acquisition unit configured to acquire playback operation information in which a playback operation of the same learning content performed by each of a plurality of learners is recorded, a result information acquisition unit configured to acquire result information indicating a result of each of the plurality of learners in a test conducted after the playback operation is performed, a learning content information acquisition unit configured to acquire learning content information that is information indicating what is played back at each of a plurality of playback positions between a playback start position and a playback end position of the learning content, and an extraction processing unit configured to execute a process of extracting one or more playback positions from the plurality of playback positions between the playback start position and the playback end position of the learning content based on a difference between the playback operation information of a learner having a test result greater than or equal to a first threshold value and the playback operation information of a learner having a test result less than the first threshold value.

According to the learning analysis device of the present invention, information (for example, information about a playback position that needs to be repeatedly played back in order to achieve a high result, information about a playback position at which high-speed playback should not be performed in order to achieve a high result, or information about a playback position that was difficult to understand for the learners) useful for the learners and a creator of the learning content can be obtained.

In the learning analysis device of one aspect of the present invention, the extraction processing unit may be configured to extract one or more playback positions from the plurality of playback positions between the playback start position and the playback end position of the learning content based on a difference between the number of times of playback of the learner having the test result greater than or equal to the first threshold value and the number of times of playback of the learner having the test result less than the first threshold value.

In a case of such a configuration, for example, the information about the playback position that needs to be repeatedly played back in order to achieve a high result can be obtained.

In the teaming analysis device of one aspect of the present invention, the extraction processing unit may be configured to extract one or more playback positions from the plurality of playback positions between the playback start position and the playback end position of the learning content based on a difference between a playback position at which the learner having the test result greater than or equal to the first threshold value performed high-speed playback and a playback position at which the learner having the test result less than the first threshold value performed the high-speed playback.

In a case of such a configuration, for example, the information about the playback position at which the high-speed playback should not be performed in order to achieve a high result can be obtained.

In the learning analysis device of one aspect of the present invention, the extraction processing unit may be configured to extract a playback position at which the number of times of playback of the learner having the test result greater than or equal to the first threshold value is approximately one, the number of times of playback of the learner having the test result less than the first threshold value is greater than one, and the difference between the number of times of playback of the learner having the test result greater than or equal to the first threshold value and the number of times of playback of the learner having the test result less than the first threshold value is greater than a second threshold value.

In a case of such a configuration, for example, information about a playback position at which a difficulty degree is excessively high for a learner having a low result can be obtained.

In the learning analysis device of one aspect of the present invention, the extraction processing unit may be configured to extract a playback position at which the number of times of playback of the learner having the test result greater than or equal to the first threshold value is greater than one, the number of times of playback of the learner having the test result less than the first threshold value is greater than one, and the difference between the number of times of playback of the learner having the test result greater than or equal to the first threshold value and the number of times of playback of the learner having the test result less than the first threshold value is less than or equal to a third threshold value.

In a case of such a configuration, for example, information about a playback position that was difficult to understand for both a learner having a high result and a learner having a low result, or for example, information about a playback position that was of interest to both the learner having a high result and the learner having a low result can be obtained.

In the learning analysis device of one aspect of the present invention, the extraction processing unit may be configured to extract a playback position at which the number of times of playback of the learner having the test result greater than or equal to the first threshold value is greater than one, the number of times of playback of the learner having the test result less than the first threshold value is approximately one or is less than or equal to one, and the difference between the number of times of playback of the learner having the test result greater than or equal to the first threshold value and the number of times of playback of the learner having the test result less than the first threshold value is greater than a fourth threshold value.

In a case of such a configuration, for example, information about a playback position to which a learner intending to achieve a high result is to pay attention can be obtained.

The learning analysis device of one aspect of the present invention may further include an average playback number-of-times calculation unit configured to, based on the playback operation information acquired by the playback operation information acquisition unit and the result information acquired by the result information acquisition unit, calculate an average number of times of playback of a plurality of learners having the test result greater than or equal to the first threshold value and the average number of times of playback of a plurality of learners having the test result less than the first threshold value at each of the plurality of playback positions between the playback start position and the playback end position of the learning content.

In the learning analysis device of one aspect of the present invention, the average playback number-of-times calculation unit may be configured to, as the average number of times of playback of the plurality of learners having the test result greater than or equal to the first threshold value, calculate an average number of times of playback of learners having a test result greater than or equal to a fifth threshold value, an average number of times of playback of learners having a test result greater than or equal to a sixth threshold value and less than the fifth threshold value, and the average number of times of playback of learners having a test result greater than or equal to the first threshold value and less than the sixth threshold value.

The learning analysis device of one aspect of the present invention may further include an estimation unit configured to, based on the playback position extracted by the extraction processing unit, estimate a playback position that was difficult to understand for the learner having the test result less than the first threshold value.

The learning analysis device of one aspect of the present invention may further include an estimation unit configured to, based on the playback position extracted by the extraction processing unit, estimate a playback position that was difficult to understand for both the learner having the test result greater than or equal to the first threshold value and the learner having the test result less than the first threshold value.

The learning analysis device of one aspect of the present invention may further include an estimation unit configured to, based on the playback position extracted by the extraction processing unit, estimate a playback position that was of interest to both the learner having the test result greater than or equal to the first threshold value and the learner having the test result less than the first threshold value.

The learning analysis device of one aspect of the present invention may further include an estimation unit configured to, based on the playback position extracted by the extraction processing unit, estimate a playback position to which a learner intending to achieve a high result needs to pay attention.

The learning analysis device of one aspect of the present invention may further include a storage unit configured to store the relationship between a reason for failure obtained from a failed person who was a learner who had a test result less than the first threshold value in the past, and the playback operation information of the failed person, and an estimation unit configured to estimate the reason for failure of the learner having the test result less than the first threshold value based on the playback operation information, acquired by the playback operation information acquisition unit, of the learner having the test result less than the first threshold value and the relationship stored in the storage unit.

In a case of such a configuration, advice can be provided to the learner having the test result less than the first threshold value based on the reason estimated by the estimation unit.

The learning analysis device of one aspect of the present invention may further include a test information acquisition unit configured to acquire test information that is information indicating a relation between questions of the test and playback positions of the learning content where explanation corresponding to the questions of the test is executed, in which the extraction processing unit is configured to extract the playback operation information of the learner at playback positions of the learning content respectively corresponding to the questions of the test based on the test information acquired by the test information acquisition unit.

In a case of such a configuration, for example, appropriate advice can be easily provided to the learner having the test result less than the first threshold value.

In the learning analysis device of one aspect of the present invention, each of the plurality of playback positions may be divided into a size corresponding to one second.

One aspect of the present invention is a learning analysis method including a playback operation information step of acquiring playback operation information in which a playback operation of the same learning content performed by each of a plurality of learners is recorded, a result information acquisition step of acquiring result information indicating a result of each of the plurality of learners in a test conducted after the playback operation is performed, a learning content information acquisition step of acquiring learning content information that is information indicating what is played back at each of a plurality of playback positions between a playback start position and a playback end position of the learning content, and an extraction processing step of executing a process of extracting one or more playback positions from the plurality of playback positions between the playback start position and the playback end position of the learning content based on a difference between the playback operation information of a learner having a test result greater than or equal to a first threshold value and the playback operation information of a learner having a test result less than the first threshold value.

According to the learning analysis method of the present invention, information (for example, the information about the playback position that needs to be repeatedly played back in order to achieve a high result, the information about the playback position at which the high-speed playback should not be performed in order to achieve a high result, or the information about the playback position that was difficult to understand for the learners) useful for the learners and the creator of the learning content can be obtained.

One aspect of the present invention is a program causing a computer to execute a playback operation information step of acquiring playback operation information in which a playback operation of the same learning content performed by each of a plurality of learners is recorded, a result information acquisition step of acquiring result information indicating a result of each of the plurality of learners in a test conducted after the playback operation is performed, a learning content information acquisition step of acquiring learning content information that is information indicating what is played back at each of a plurality of playback positions between a playback start position and a playback end position of the learning content, and an extraction processing step of executing a process of extracting one or more playback positions from the plurality of playback positions between the playback start position and the playback end position of the learning content based on a difference between the playback operation information of a learner having a test result greater than or equal to a first threshold value and the playback operation information of a learner having a test result less than the first threshold value.

According to the program of the present invention, information (for example, the information about the playback position that needs to be repeatedly played back in order to achieve a high result, the information about the playback position at which the high-speed playback should not be performed in order to achieve a high result, or the information about the playback position that was difficult to understand for the learners) useful for the learners and the creator of the learning content can be obtained.

### [Advantageous Effects of Invention]

According to the present invention, a learning analysis device, a learning analysis method, and a program that can obtain information useful for a learner and a creator of learning content can be provided.

### [Brief Description of Drawings]

FIG. 1 is a diagram showing an example of function blocks of a learning analysis device of a first embodiment.
FIG. 2 is a diagram showing an example of the number of times of playback of one learner at each of a plurality of playback positions between a playback start position and a playback end position of learning content.
FIG. 3 is a diagram showing an example in which the number of times of playback of one learner at each of the plurality of playback positions between the playback start position and the playback end position of the learning content as shown in FIG. 2 is added for 85 persons.
FIG. 4 is a diagram showing an example of an average number of times of playback of passed persons (65 learners) of a test and an average number of times of playback of failed persons (20 learners) of the test at each of the plurality of playback positions between the playback start position and the playback end position of the learning content.

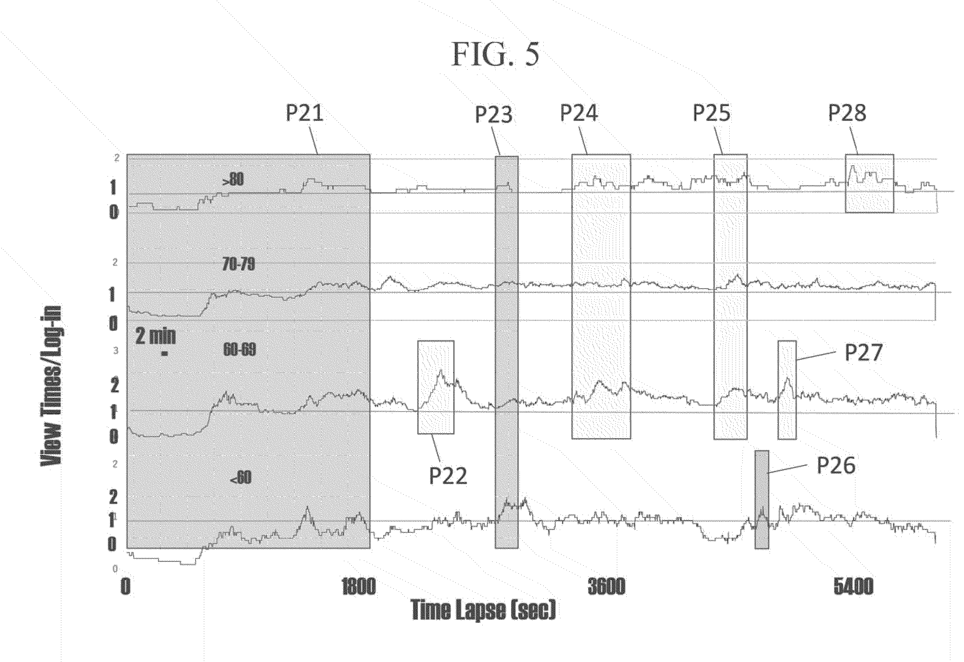

FIG. 5 is a diagram showing an example of the average number of times of playback of learners having a test result greater than or equal to 80 points, the average number of times of playback of learners having a test result greater than or equal to 70 points and less than 80 points, the average number of times of playback of learners having a test result greater than or equal to 60 points and less than 70 points, and the average number of times of playback of learners having a test result of less than 60 points at each of the plurality of playback positions between the playback start position and the playback end position of the learning content.
FIG. 6 is a flowchart showing an example of a process executed in the learning analysis device of the first embodiment.
FIG. 7 is a diagram showing an example of function blocks of a learning analysis device of a second embodiment.
FIG. 8 is a diagram showing an example of function blocks of a learning analysis device of a third embodiment.
FIG. 9 is a diagram showing an example of function blocks of a learning analysis device of a fourth embodiment.

### [Description of Embodiments]

Hereinafter, embodiments of a learning analysis device, a learning analysis method, and a program of the present invention will be described.

### <First Embodiment>

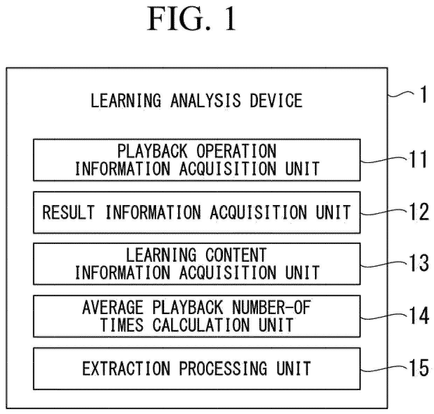

FIG. 1 is a diagram showing an example of function blocks of a learning analysis device 1 of a first embodiment.

In the example shown in FIG. 1, the learning analysis device 1 executes analysis of learning content, analysis of a learner who viewed the learning content, analysis of the relationship between the learning content and the learner who viewed the learning content, and the like.

The learning content applied to the learning analysis device 1 of the first embodiment may be any of a content including only an image, a content including only a voice, and a content including both the image and the voice. For example, the learning content applied to the learning analysis device 1 of the first embodiment includes a content in which a lecture delivered by an instructor is recorded, and a content including slides of a lecture material and a voice describing contents of the slides. The learner applied to the learning analysis device 1 of the first embodiment may be any of, for example, a student, a pupil, a child, and a new employee.

In the example shown in FIG. 1, the learning analysis device 1 includes a playback operation information acquisition unit 11, a result information acquisition unit 12, a learning content information acquisition unit 13, an average playback number-of-times calculation unit 14, and an extraction processing unit 15.

The playback operation information acquisition unit 11 acquires playback operation information in which a playback operation of the same learning content performed by each of a plurality of learners is recorded. For example, the playback operation information includes information indicating the number of times of playback of the learning content.

For example, in a case where the learning content is played back from a playback start position to a playback end position without performing rewinding, skip playback, or the like, the number of times of playback at each playback position from the playback start position to the playback end position of the learning content is "1".

For example, in a case where the rewinding is performed once in the middle of the learning content from the playback start position to the playback end position, the number of times of playback at a playback position that is played back only once from the playback start position to the playback end position of the learning content is "1", and the number of times of playback at a playback position that is played back twice is "2".

For example, in a case where the skip playback is performed once in the middle of the learning content from the playback start position to the playback end position, the number of times of playback at a playback position that is skipped from the playback start position to the playback end position of the learning content is "0", and the number of times of playback at a playback position that is not skipped is "1".

The result information acquisition unit 12 acquires result information indicating a result of each of the plurality of learners in a test conducted after the playback operation of the learning content is performed (that is, after the learner views the learning content). The result information includes information about whether each of the plurality of learners passed or failed the test, information about the result (for example, less than 60 points, or greater than or equal to 80 points) of each of the plurality of learners, and the like.

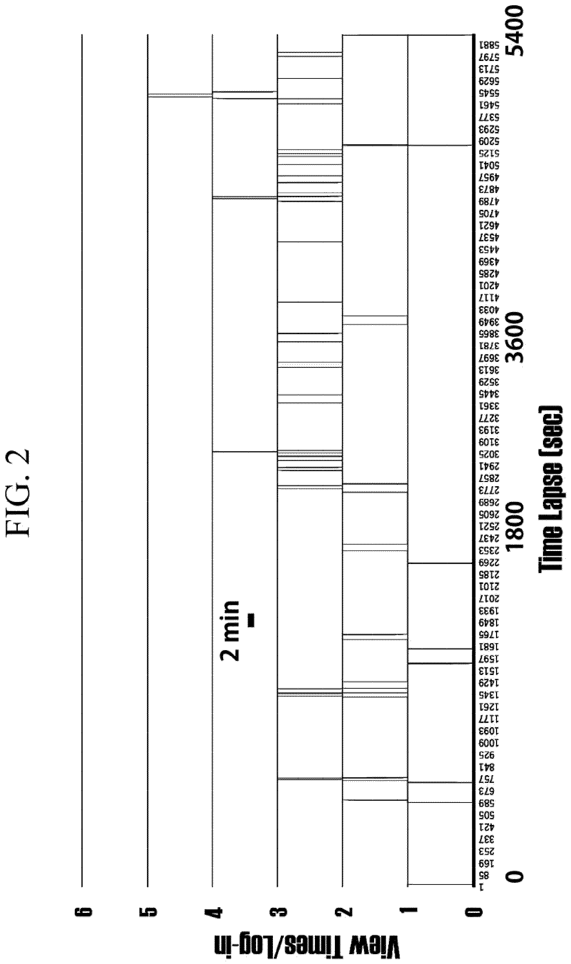

The learning content information acquisition unit 13 acquires learning content information that is information indicating what is played back at each of a plurality of playback positions between the playback start position (for example, a position of 0 [sec] on a horizontal axis of FIG. 2 to FIG. 5) and the playback end position (for example, a position of 5400 [sec] on the horizontal axis of FIG. 2 to FIG. 5) of the learning content. For example, the learning content information includes information indicating a lecture content at each playback position. Specifically, for example, the learning content information includes information about whether or not the lecture content at each playback position has a high difficulty degree, information about whether or not the lecture content at each playback position has a low difficulty degree, and information about whether or not the lecture content at each playback position is simple administrative contact.

The average playback number-of-times calculation unit 14 executes, for example, calculation of an average number of times of playback of the plurality of learners at each of the plurality of playback positions between the playback start position and the playback end position of the learning content based on the playback operation information acquired by the playback operation information acquisition unit 11. In the example shown in FIG. 1, each of the plurality of playback positions is divided into a size corresponding to 1 [sec]. In another example, each of the plurality of playback positions may be divided into any size different from the size corresponding to 1 [sec].

In the example shown in FIG. 1, for example, the average playback number-of-times calculation unit 14 calculates the number of times of playback of each learner at each of the plurality of playback positions between the playback start position and the playback end position of the learning content in order to calculate the average number of times of playback.

FIG. 2 is a diagram showing an example of the number of times of playback of one learner at each of the plurality of playback positions between the playback start position and the playback end position of the learning content.

In the example shown in FIG. 2, a lecture of 90 [min] (5400 [sec]) delivered by the instructor is recorded in the learning content. The horizontal axis of FIG. 2 shows each of the plurality of playback positions between the playback start position and the playback end position of the learning content. A left end of FIG. 2 corresponds to a start time point of the lecture of 5400 [sec], and a right end of FIG. 2 corresponds to an end time point of the lecture of 5400 [sec]. A vertical axis of FIG. 2 shows the number of times of playback.

In FIG. 2, a playback position at which the number of times of playback is "0" means that the playback position is not viewed by the learner by performing the skip playback. A playback position at which the number of times of playback is "1" means that the playback position is viewed once by the learner by not performing the skip playback and not performing the rewinding. A playback position at which the number of times of playback is "2" means that the playback position is viewed twice by the learner by not performing the skip playback and performing the rewinding once. A playback position at which the number of times of playback is "3" means that the playback position is viewed three times by the learner by not performing the skip playback and performing the rewinding twice.

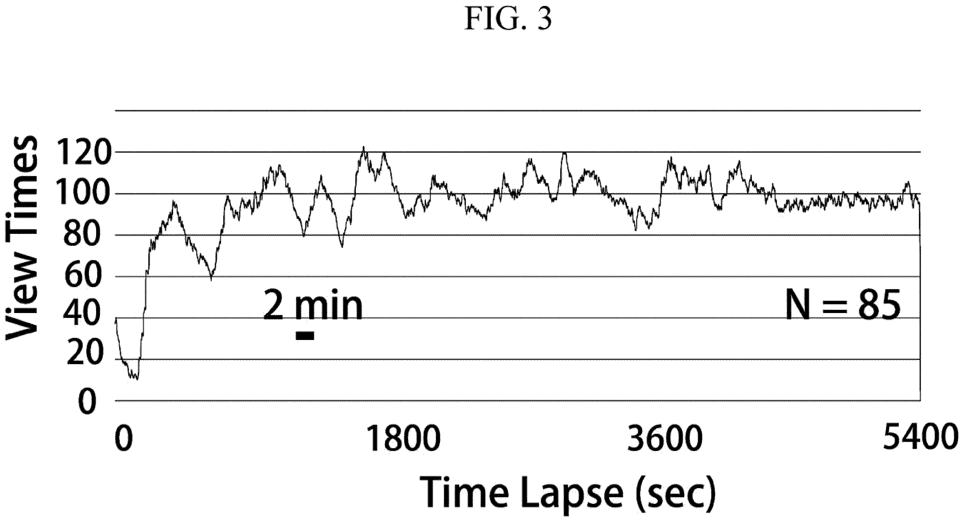

FIG. 3 is a diagram showing an example in which the number of times of playback of one learner at each of the plurality of playback positions between the playback start position and the playback end position of the learning content as shown in FIG. 2 is added for 85 persons.

In the same manner as the horizontal axis of FIG. 2, the horizontal axis of FIG. 3 shows each of the plurality of playback positions between the playback start position and the playback end position of the learning content. The vertical axis of FIG. 3 shows the added number of times of playback.

For example, an added number of times of playback [120] near a playback position 1800 [sec] means that the total value of the number of times of playback of 85 learners at the playback position is 120. That is, the average number of times of playback of 85 learners at the playback position is approximately 1.4 (= 120/85) [times].

In the example shown in FIG. 1, the average playback number-of-times calculation unit 14 executes calculation of the average number of times of playback of the plurality of learners at each playback position as described above.

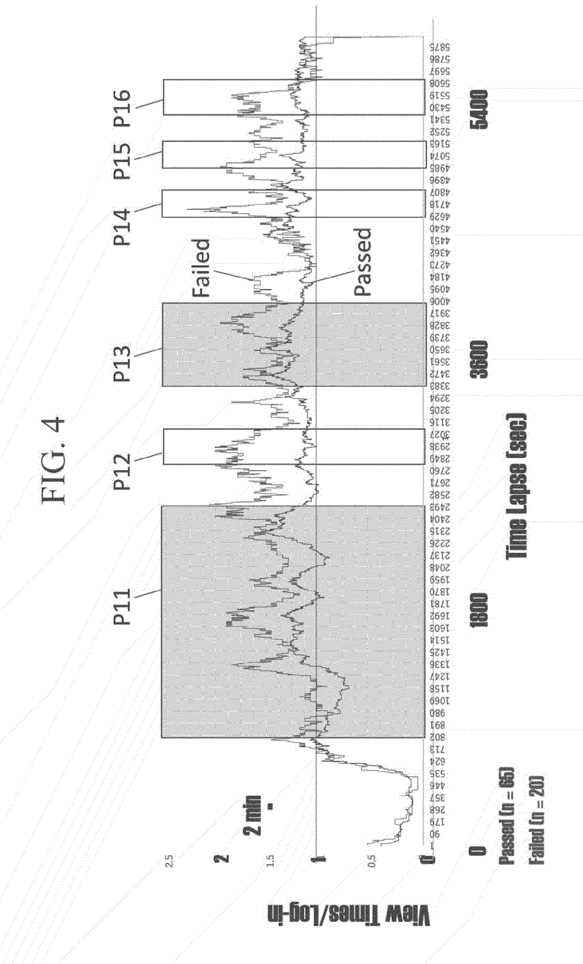

FIG. 4 is a diagram showing an example of the average number of times of playback of passed persons (65 learners) of a test and the average number of times of playback of failed persons (20 learners) of the test at each of the plurality of playback positions between the playback start position and the playback end position of the learning content.

In the same manner as the horizontal axis of FIG. 2, the horizontal axis of FIG. 4 shows each of the plurality of playback positions between the playback start position and the playback end position of the learning content. The vertical axis of FIG. 4 shows the average number of times of playback.

In FIG. 4, a curve "Passed" shows the average number of times of playback of the passed persons (65 learners) of the test, and a curve "Failed" shows the average number of times of playback of the failed persons (20 learners) of the test.

In the example shown in FIG. 1, based on the playback operation information of each of all test takers (85 learners) of the test acquired by the playback operation information acquisition unit 11 and the result information of each of all test takers (85 learners) of the test acquired by the result information acquisition unit 12, the average playback number-of-times calculation unit 14 calculates the average number of times of playback of the passed persons (65 learners) of the test at each of the plurality of playback positions between the playback start position and the playback end position of the learning content, and the average number of times of playback of the failed persons (20 learners) of the test at each of the plurality of playback positions between the playback start position and the playback end position of the learning content.

In the example shown in FIG. 4, it is perceived that the average number of times of playback of the passed persons (65 learners) of the test at each of the plurality of playback positions between the playback start position and the playback end position of the learning content is different from the average number of times of playback of the failed persons (20 learners) of the test at each of the plurality of playback positions between the playback start position and the playback end position of the learning content.

In the example shown in FIG. 1, the extraction processing unit 15 executes a process of extracting one or more playback positions from the plurality of playback positions between the playback start position and the playback end position of the learning content based on a difference (for example, a difference in number of times of playback) between the playback operation information of learners (for example, the passed persons) having a test result greater than or equal to a threshold value T1 and the playback operation information of learners (for example, the failed persons) having a test result less than the threshold value T1.

In the examples shown in FIG. 1 and FIG. 4, the extraction processing unit 15 extracts a playback position P11, a playback position P12, a playback position P13, a playback position P14, a playback position P15, and a playback position P16 from the plurality of playback positions between the playback start position and the playback end position of the learning content based on a difference between the number of times of playback of the learners (passed persons) having the test result greater than or equal to the threshold value T1 (for example, 60 points) and the number of times of playback of the learners (failed persons) having the test result less than the threshold value T1 (60 points).

Specifically, in the examples shown in FIG. 1 and FIG. 4, the extraction processing unit 15 extracts the playback position P12, the playback position P14, the playback position P15, and the playback position P16 as a playback position at which the number of times of playback of the learners (passed persons) having the test result greater than or equal to the threshold value T1 is approximately one, the number of times of playback of the learners (failed persons) having the test result less than the threshold value T1 is greater than one, and the difference between the number of times of playback of the learners (passed persons) having the test result greater than or equal to the threshold value T1 and the number of times of playback of the learners (failed persons) having the test result less than the threshold value T1 is greater than a predetermined threshold value T2.

Furthermore, in the examples shown in FIG. 1 and FIG. 4, the extraction processing unit 15 extracts the playback position P11 and the playback position P13 as a playback position at which the number of times of playback of the learners (passed persons) having the test result greater than or equal to the threshold value T1 is greater than one, the number of times of playback of the learners (failed persons) having the test result less than the threshold value T1 is greater than one, and the difference between the number of times of playback of the learners (passed persons) having the test result greater than or equal to the threshold value T1 and the number of times of playback of the learners (failed persons) having the test result less than the threshold value T1 is less than or equal to a predetermined threshold value T3.

FIG. 5 is a diagram showing an example of an average number of times of playback of learners having a test result greater than or equal to 80 points, an average number of times of playback of learners having a test result greater than or equal to 70 points and less than 80 points, an average number of times of playback of learners having a test result greater than or equal to 60 points and less than 70 points, and an average number of times of playback of learners having the test result of less than 60 points at each of the plurality of playback positions between the playback start position and the playback end position of the learning content.

In the same manner as the horizontal axis of FIG. 2, the horizontal axis of FIG. 5 shows each of the plurality of playback positions between the playback start position and the playback end position of the learning content. The vertical axis of FIG. 5 shows the average number of times of playback.

In FIG. 5, the curve ">80" shows the average number of times of playback of the learners having the test result greater than or equal to 80 points. The curve "70-79" shows the average number of times of playback of the learners having the test result greater than or equal to 70 points and less than 80 points. The curve "60-69" shows the average number of times of playback of the learners having the test result greater than or equal to 60 points and less than 70 points. The curve "<60" shows the average number of times of playback of the learners having the test result less than 60 points.

In the example shown in FIG. 1, based on the playback operation information of each of all test takers (85 learners) of the test acquired by the playback operation information acquisition unit 11 and the result information of each of all test takers (85 learners) of the test acquired by the result information acquisition unit 12, the average playback number-of-times calculation unit 14 calculates the average number of times of playback of the learners having the test result greater than or equal to 80 points (threshold value T5) at each of the plurality of playback positions between the playback start position and the playback end position of the learning content, the average number of times of playback of the learners having the test result greater than or equal to 70 points (threshold value T6) and less than 80 points (threshold value T5) at each of the plurality of playback positions between the playback start position and the playback end position of the learning content, the average number of times of playback of the learners having the test result greater than or equal to 60 points (threshold value T1) and less than 70 points (threshold value T6) at each of the plurality of playback positions between the playback start position and the playback end position of the learning content, and the average number of times of playback of the learners having the test result of less than 60 points (threshold value T1) at each of the plurality of playback positions between the playback start position and the playback end position of the learning content.

In the example shown in FIG. 5, it is perceived that the average number of times of playback of the learners having the test result greater than or equal to 80 points (threshold value T5) at each of the plurality of playback positions between the playback start position and the playback end position of the learning content, the average number of times of playback of the learners having the test result greater than or equal to 70 points (threshold value T6) and less than 80 points (threshold value T5) at each of the plurality of playback positions between the playback start position and the playback end position of the learning content, the average number of times of playback of the learners having the test result greater than or equal to 60 points (threshold value T1) and less than 70 points (threshold value T6) at each of the plurality of playback positions between the playback start position and the playback end position of the learning content, and the average number of times of playback of the learners having the test result of less than 60 points (threshold value T1) at each of the plurality of playback positions between the playback start position and the playback end position of the learning content are different from each other.

In the example shown in FIG. 1, the extraction processing unit 15 executes the process of extracting one or more playback positions from the plurality of playback positions between the playback start position and the playback end position of the learning content based on differences (for example, differences in number of times of playback) among the playback operation information of the learners having the test result greater than or equal to 80 points, the playback operation information of the learners having the test result greater than or equal to 70 points and less than 80 points, the playback operation information of the learners having the test result greater than or equal to 60 points and less than 70 points, and the playback operation information of the learners having the test result less than 60 points.

In the examples shown in FIG. 1 and FIG. 5, the extraction processing unit 15 extracts a playback position P21, a playback position P22, a playback position P23, a playback position P24, a playback position P25, a playback position P26, a playback position P27, and a playback position P28 from the plurality of playback positions between the playback start position and the playback end position of the learning content based on differences among the number of times of playback of the learners having the test result greater than or equal to the threshold value T5 (80 points), the number of times of playback of the learners having the test result greater than or equal to the threshold value T6 (70 points) and less than the threshold value T5 (80 points), the number of times of playback of the learners having the test result greater than or equal to the threshold value T1 (60 points) and less than the threshold value T6 (70 points), and the number of times of playback of the learners having the test result less than the threshold value T1 (60 points).

Specifically, in the examples shown in FIG. 1 and FIG. 5, the extraction processing unit 15 extracts the playback position P26 as a playback position at which the number of times of playback of the learners having the test result greater than or equal to the threshold value T1 (60 points) is approximately one, the number of times of playback of the learners having the test result less than the threshold value T1 (60 points) is greater than one, and the difference between the number of times of playback of the learners having the test result greater than or equal to the threshold value T1 (60 points) and the number of times of playback of the learners having the test result less than the threshold value T1 (60 points) is greater than the predetermined threshold value T2.

Furthermore, in the examples shown in FIG. 1 and FIG. 5, the extraction processing unit 15 extracts the playback position P21 and the playback position P23 as a playback position at which the number of times of playback of the learners having the test result greater than or equal to the threshold value T1 (60 points) is greater than one, the number of times of playback of the learners having the test result less than the threshold value Tl (60 points) is greater than one, and the difference between the number of times of playback of the learners (passed persons) having the test result greater than or eqtial to the threshold value T1 (60 points) and the number of times of playback of the learners (failed persons) having the test result less than the threshold value T1 (60 points) is less than or equal to the predetermined threshold value T3.

In addition, in the examples shown in FIG. 1 and FIG. 5, the extraction processing unit 15 extracts the playback position P22, the playback position P24, the playback position P25, the playback position P27, and the playback position P28 as a playback position at which the number of times of playback of the learners having the test result greater than or equal to the threshold value T1 (60 points) is greater than one, the number of times of playback of the learners having the test result less than the threshold value T1 (60 points) is approximately one or is less than or equal to one, and the difference between the number of times of playback of the learners having the test result greater than or equal to the threshold value T1 (60 points) and the number of times of playback of the learners having the test result less than the threshold value T1 (60 points) is greater than a predetermined threshold value T4.

As described above, in the examples shown in FIG. 1 to FIG. 4, the extraction processing unit 15 extracts one or more playback positions P11 to P16 from the plurality of playback positions between the playback start position and the playback end position of the learning content based on the difference between the number of times of playback of the learners (passed persons) having the test result greater than or equal to the threshold value T1 (60 points) and the number of times of playback of the learners (failed persons) having the test result less than the threshold value T1 (60 points).

Meanwhile, in another example, the extraction processing unit 15 may extract one or more playback positions from the plurality of playback positions between the playback start position and the playback end position of the learning content based on a difference between a playback position at which the learners (passed persons) having the test result greater than or equal to the threshold value T1 (60 points) performed high-speed playback (for example, playback having a speed higher than a normal speed, such as a double speed) and a playback position at which the learners (failed persons) having the test result less than the threshold value T1 (60 points) performed the high-speed playback.

That is, in this example, the extraction processing unit 15 executes the process of extracting one or more playback positions from the plurality of playback positions between the playback start position and the playback end position of the learning content based on a difference (for example, a difference of whether or not the high-speed playback is performed) between the playback operation information of the learners (passed persons) having the test result greater than or equal to the threshold value T1 (60 points) and the playback operation information of the learners (failed persons) having the test result less than the threshold value T1 (60 points).

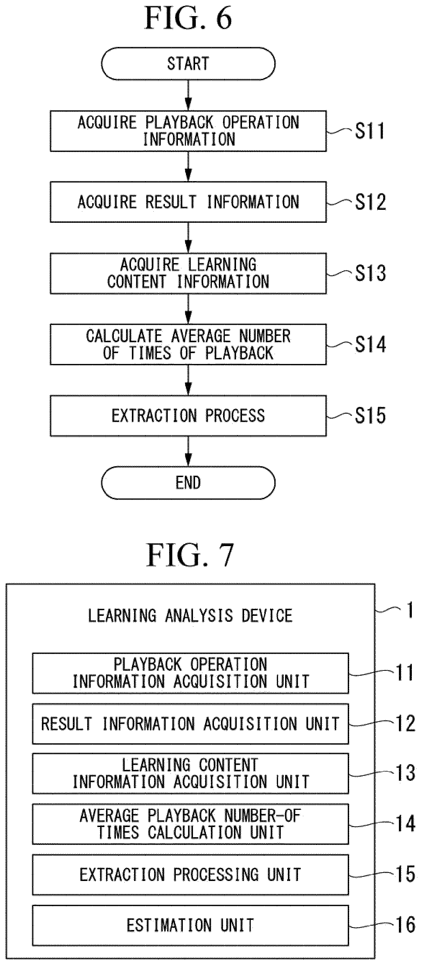

FIG. 6 is a flowchart showing an example of a process executed in the learning analysis device 1 of the first embodiment.

In the example shown in FIG. 6, in step S11, the playback operation information acquisition unit 11 acquires the playback operation information in which the playback operation of the same learning content performed by each of the plurality of learners is recorded.

In addition, in step S12, the result information acquisition unit 12 acquires the result information indicating the result of each of the plurality of learners in the test conducted after the playback operation of the learning content is performed (that is, after the learner views the learning content).

Furthermore, in step S13, the learning content information acquisition unit 13 acquires the learning content information that is information indicating what is played back at each of the plurality of playback positions between the playback start position and the playback end position of the learning content.

Next, in step S14, the average playback number-of-times calculation unit 14 executes, for example, calculation of the average number of times of playback of the plurality of learners at each of the plurality of playback positions between the playback start position and the playback end position of the learning content based on the playback operation information acquired in step S11.

Next, in step S15, the extraction processing unit 15 executes the process of extracting one or more playback positions from the plurality of playback positions between the playback start position and the playback end position of the learning content based on the difference between the playback operation information of the learners having the test result greater than or equal to the threshold value T1 (for example, 60 points) and the playback operation information of the learners having the test result less than the threshold value T1.

### <Second Embodiment

Hereinafter, a second embodiment of the learning analysis device, the learning analysis method, and the program of the present invention will be described.

The learning analysis device 1 of the second embodiment is configured in the same manner as the learning analysis device 1 of the first embodiment except for points described later. Thus, according to the learning analysis device 1 of the second embodiment, the same effects as the learning analysis device 1 of the first embodiment can be achieved except for the points described later.

FIG. 7 is a diagram showing an example of function blocks of the learning analysis device 1 of the second embodiment.

As described above, in the example shown in FIG. 1, the learning analysis device 1 does not include an estimation unit.

Meanwhile, in the example shown in FIG. 7, the learning analysis device 1 includes an estimation unit 16. Based on the playback positions (for example, the playback positions P11 to P16) extracted by the extraction processing unit 15, the estimation unit 16 estimates playback positions (for example, the playback positions P12, P14, P15, and P16) that are difficult to understand for the learners (failed persons) having the test result less than the threshold value T1 (60 points).

Furthermore, based on the playback positions (for example, the playback positions P11 to P16) extracted by the extraction processing unit 15, the estimation unit 16 estimates playback positions (for example, the playback positions P11 and P13) that are difficult to understand for both the learners (passed persons) having the test result greater than or equal to the threshold value 11 (60 points) and the learners (failed persons) having the test result less than the threshold value T1 (60 points).

In addition, based on the playback positions (for example, the playback positions P11 to P16) extracted by the extraction processing unit 15, the estimation unit 16 may estimate playback positions (for example, the playback positions P11 and P13) that were of interest to both the learners (passed persons) having the test result greater than or equal to the threshold value T1 (60 points) and the learners (failed persons) having the test result less than the threshold value T1 (60 points).

In another example of the learning analysis device 1 of the second embodiment, based on the playback positions (for example, the playback positions P21 to P28) extracted by the extraction processing unit 15, the estimation unit 16 may estimate playback positions (for example, the playback positions P22, P24, P25, P27, and P28) to which a learner intending to achieve a high result needs to pay attention.

### <Third Embodiment>

Hereinafter, a third embodiment of the learning analysis device, the learning analysis method, and the program of the present invention will be described.

The learning analysis device 1 of the third embodiment is configured in the same manner as the learning analysis device 1 of the first embodiment except for points described later. Thus, according to the learning analysis device 1 of the third embodiment, the same effects as the learning analysis device 1 of the first embodiment can be achieved except for the points described later.

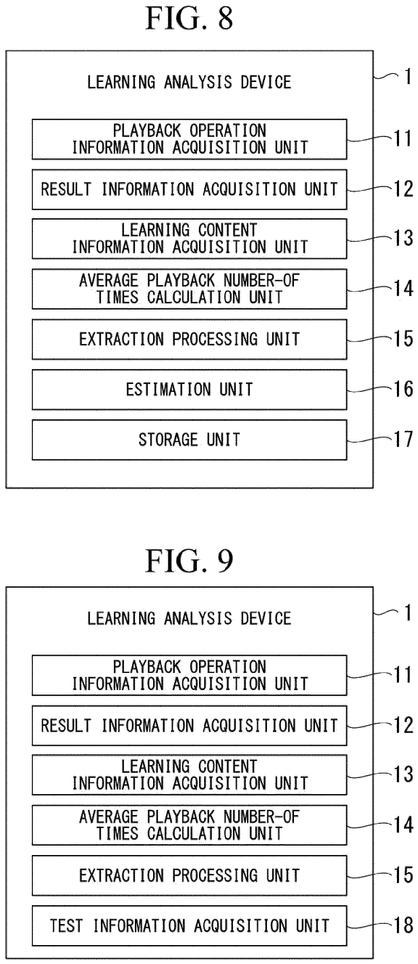

FIG. 8 is a diagram showing an example of function blocks of the learning analysis device 1 of the third embodiment.

As described above, in the example shown in FIG. 1, the learning analysis device 1 does not include the estimation unit and a storage unit.

Meanwhile, in the example shown in FIG. 8, the learning analysis device 1 includes the estimation unit 16 and a storage unit 17. The storage unit 17 stores the relationship between reasons for failure obtained from the failed persons who are the learners who had the test result less than the threshold value T1 (for example, 60 points) in the past, and the playback operation information (for example, information related to the number of times of playback shown in FIG. 2) of the failed persons.

The estimation unit 16 estimates the reasons for failure of the learners having the result of the current test less than the threshold value T1 (60 points) based on, for example, the playback operation information, acquired by the playback operation information acquisition unit 11, of the learners (failed persons) having the result of the current test less than the threshold value T1 (60 points) and the relationship stored in the storage unit 17.

### <Fourth Embodiment>

Hereinafter, a fourth embodiment of the learning analysis device, the learning analysis method, and the program of the present invention will be described.

The learning analysis device 1 of the fourth embodiment is configured in the same manner as the learning analysis device 1 of the first embodiment except for points described later. Thus, according to the learning analysis device 1 of the fourth embodiment, the same effects as the learning analysis device 1 of the first embodiment can be achieved except for the points described later.

FIG. 9 is a diagram showing an example of function blocks of the learning analysis device 1 of the fourth embodiment.

As described above, in the example shown in FIG. 1, the learning analysis device 1 does not include a test information acquisition unit,

Meanwhile, in the example shown in FIG. 9, the learning analysis device 1 includes a test information acquisition unit 18. The test information acquisition unit 18 acquires test information that is information indicating a relation between questions of the test and playback positions of the learning content where explanation corresponding to the questions of the test is executed. The extraction processing unit 15 extracts the playback operation information of the learners (failed persons) at playback positions of the learning content respectively corresponding to the questions of the test based on the test information acquired by the test information acquisition unit 18.

In this example, for example, the instructor can provide appropriate and direct advice to the failed persons using the playback operation information of the failed persons extracted by the extraction processing unit 15.

While modes for carrying out the present invention are described above using the embodiments, the present invention is not limited to any of the embodiments, and various modifications and substitutions can be made without departing from the gist of the present invention. The configurations disclosed in each embodiment and each example described above may be combined.

All or a part of the functions of each unit included in the learning analysis device 1 in the embodiments may be implemented by recording a program for implementing the functions on a computer-readable recording medium and causing a computer system to read and execute the program recorded on the recording medium. Here, it is assumed that the "computer system" includes an OS and hardware such as a peripheral device.

In addition, the "computer-readable recording medium" refers to a portable medium such as a flexible disk, a magneto-optical disc, a read-only memory (ROM), or a compact disc read-only memory (CD-ROM), or a storage unit such as a hard disk incorporated in the computer system. Furthermore, the "computer-readable recording medium" may include a medium dynamically holding the program for a short time period, such as a communication line in a case of transmitting the program through a network such as the Internet or a communication line such as a telephone line, and a medium holding the program for a certain time period, such as a volatile memory inside the computer system used as a server or a client in the case of transmitting the program. In addition, the program may be a program implementing a part of the functions, or furthermore, a program capable of implementing the functions in combination with a program already recorded in the computer system.

### [Reference Signs List]

1: Learning analysis device
11: Playback operation information acquisition unit
12: Result information acquisition unit
13: Learning content information acquisition unit
14: Average playback number-of-times calculation unit
15: Extraction processing unit
16: Estimation unit
17: Storage unit
18: Test information acquisition unit

## Claims

1. A learning analysis device comprising:
a playback operation information acquisition unit configured to acquire playback operation information in which a playback operation of the same learning content performed by each of a plurality of learners is recorded;
a result information acquisition unit configured to acquire result information indicating a result of each of the plurality of learners in a test conducted after the playback operation is performed;
a learning content information acquisition unit configured to acquire learning content information that is information indicating what is played back at each of a plurality of playback positions between a playback start position and a playback end position of the learning content; and
an extraction processing unit configured to execute a process of extracting one or more playback positions from the plurality of playback positions between the playback start position and the playback end position of the learning content based on a difference between the playback operation information of a learner having a test result greater than or equal to a first threshold value and the playback operation information of a learner having a test result less than the first threshold value.

2. The learning analysis device according to Claim 1,
wherein the extraction processing unit is configured to extract one or more playback positions from the plurality of playback positions between the playback start position and the playback end position of the learning content based on a difference between the number of times of playback of the learner having the test result greater than or equal to the first threshold value and the number of times of playback of the learner having the test result less than the first threshold value.

3. The learning analysis device according to Claim 1,
wherein the extraction processing unit is configured to extract one or more playback positions from the plurality of playback positions between the playback start position and the playback end position of the learning content based on a difference between a playback position at which the learner having the test result greater than or equal to the first threshold value performed high-speed playback and a playback position at which the learner having the test result less than the first threshold value performed the high-speed playback.

4. The learning analysis device according to Claim 2,
wherein the extraction processing unit is configured to extract a playback position at which the number of times of playback of the learner having the test result greater than or equal to the first threshold value is approximately one, the number of times of playback of the learner having the test result less than the first threshold value is greater than one, and the difference between the number of times of playback of the learner having the test result greater than or equal to the first threshold value and the number of times of playback of the learner having the test result less than the first threshold value is greater than a second threshold value.

5. The learning analysis device according to Claim 2,
wherein the extraction processing unit is configured to extract a playback position at which the number of times of playback of the learner having the test result greater than or equal to the first threshold value is greater than one, the number of times of playback of the learner having the test result less than the first threshold value is greater than one, and the difference between the number of times of playback of the learner having the test result greater than or equal to the first threshold value and the number of times of playback of the learner having the test result less than the first threshold value is less than or equal to a third threshold value.

6. The learning analysis device according to Claim 2,
wherein the extraction processing unit is configured to extract a playback position at which the number of times of playback of the learner having the test result greater than or equal to the first threshold value is greater than one, the number of times of playback of the learner having the test result less than the first threshold value is approximately one or is less than or equal to one, and the difference between the number of times of playback of the learner having the test result greater than or equal to the first threshold value and the number of times of playback of the learner having the test result less than the first threshold value is greater than a fourth threshold value.

7. The learning analysis device according to Claim 2, further comprising:
an average playback number-of-times calculation unit configured to, based on the playback operation information acquired by the playback operation information acquisition unit and the result information acquired by the result information acquisition unit, calculate an average number of times of playback of a plurality of learners having the test result greater than or equal to the first threshold value and an average number of times of playback of a plurality of learners having the test result less than the first threshold value at each of the plurality of playback positions between the playback start position and the playback end position of the learning content.

8. The learning analysis device according to Claim 7,
wherein the average playback number-of-times calculation unit is configured to,
as the average number of times of playback of the plurality of learners having the test result greater than or equal to the first threshold value,
calculate an average number of times of playback of learners having a test result greater than or equal to a fifth threshold value, an average number of times of playback of learners having a test result greater than or equal to a sixth threshold value and less than the fifth threshold value, and an average number of times of playback of learners having a test result greater than or equal to the first threshold value and less than the sixth threshold value.

9. The learning analysis device according to Claim 4, further comprising:
an estimation unit configured to, based on the playback position extracted by the extraction processing unit, estimate a playback position that was difficult to understand for the learner having the test result less than the first threshold value.

10. The learning analysis device according to Claim 5, further comprising:
an estimation unit configured to, based on the playback position extracted by the extraction processing unit, estimate a playback position that was difficult to understand for both the learner having the test result greater than or equal to the first threshold value and the learner having the test result less than the first threshold value.

11. The learning analysis device according to Claim 5, further comprising:
an estimation unit configured to, based on the playback position extracted by the extraction processing unit, estimate a playback position that was of interest to both the learner having the test result greater than or equal to the first threshold value and the learner having the test result less than the first threshold value.

12. The learning analysis device according to Claim 6, further comprising:
an estimation unit configured to, based on the playback position extracted by the extraction processing unit, estimate a playback position to which a learner intending to achieve a high result needs to pay attention.

13. The learning analysis device according to Claim 1, further comprising:
a storage unit configured to store a relationship between a reason for failure obtained from a failed person who was a learner who had the test result less than the first threshold value in the past, and the playback operation information of the failed person; and
an estimation unit configured to estimate the reason for failure of the learner having the test result less than the first threshold value based on the playback operation information, acquired by the playback operation information acquisition unit, of the learner having the test result less than the first threshold value and the relationship stored in the storage unit.

14. The learning analysis device according to Claim 1, further comprising:
a test information acquisition unit configured to acquire test information that is information indicating a relation between questions of the test and playback positions of the learning content where explanation corresponding to the questions of the test is executed,
wherein the extraction processing unit is configured to extract the playback operation information of the learner at playback positions of the learning content respectively corresponding to the questions of the test based on the test information acquired by the test information acquisition unit.

15. The learning analysis device according to Claim 1,
wherein each of the plurality of playback positions is divided into a size corresponding to one second.

16. A learning analysis method comprising:
a playback operation information step of acquiring playback operation information in which a playback operation of the same learning content performed by each of a plurality of learners is recorded;
a result information acquisition step of acquiring result information indicating a result of each of the plurality of learners in a test conducted after the playback operation is performed:
a learning content information acquisition step of acquiring learning content information that is information indicating what is played back at each of a plurality of playback positions between a playback start position and a playback end position of the learning content; and
an extraction processing step of executing a process of extracting one or more playback positions from the plurality of playback positions between the playback start position and the playback end position of the learning content based on a difference between the playback operation information of a learner having a test result greater than or equal to a first threshold value and the playback operation information of a learner having a test result less than the first threshold value.

17. A program causing a computer to execute:
a playback operation information step of acquiring playback operation information in which a playback operation of the same learning content performed by each of a plurality of learners is recorded;
a result information acquisition step of acquiring result information indicating a result of each of the plurality of learners in a test conducted after the playback operation is performed;
a learning content information acquisition step of acquiring learning content information that is information indicating what is played back at each of a plurality of playback positions between a playback start position and a playback end position of the learning content; and
an extraction processing step of executing a process of extracting one or more playback positions from the plurality of playback positions between the playback start position and the playback end position of the learning content based on a difference between the playback operation information of a learner having a test result greater than or equal to a first threshold value and the playback operation information of a learner having a test result less than the first threshold value.
